# EUROPÄISCHE PATENTSCHRIFT

(11) **EP 0 619 476 B1**
(45) Veröffentlichungstag und Bekanntmachung des Hinweises auf die Patenterteilung: **22.09.1999**
(21) Anmeldenummer: 93119837.8
(22) Anmeldetag: 09.12.1993
(51) Int. Cl.: G01F 23/28, G01F 11/28

(54) **Vorrichtung zur Detektion einer Flüssigkeitphasengrenze in einem lichtdurchlässigen Messrohr**
Device for detection of a fluidic interface in a transparent measuring tube
Dispositif pour la détection d'un interface fluidique dans un tube de mesure transparent

(30) Priorität: 19.12.1992 DE 4243247
(43) Veröffentlichungstag der Anmeldung: 12.10.1994
(73) Patentinhaber: Roche Diagnostics GmbH, 68305 Mannheim (DE)
(72) Erfinder: Krause, Friedemann, Dr. rer. nat., D-82377 Penzberg (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 014 120
- EP-A- 0 541 501
- DE-A- 3 737 204
- DE-A- 4 026 228
- FR-A- 2 496 259
- GB-A- 2 256 478
- NL-A- 8 400 518
- PATENT ABSTRACTS OF JAPAN vol. 9, no. 232 (P-389) (1955) 18. September 1985 & JP-A-60 086 439 (TOSHIBA) 16. Mai 1985
- THE STEAM ENGINEER, Bd.25, Nr.291, Dezember 1955 Seite 108 'HOPKINSONS REMOTE WATER LEVEL TELEVISION SYSTEM'

## Beschreibung

Die Erfindung betrifft eine Vorrichtung zum automatischen exakten Dosieren kleiner Flüssigkeitsmengen in einem medizinischen Analysegerät umfassend eine Vorrichtung zur Detektion einer Flüssigkeits-Phasengrenze in einem lichtdurchlässigen Meßrohr.

Vorrichtungen zur Detektion einer Flüssigkeits-Phasengrenze in einem Meßrohr werden vielfach benötigt. Als Flüssigkeits-Phasengrenze ist dabei jede Grenzfläche zwischen einer Flüssigkeit und einer in Phasengrenzkontakt zu dieser stehenden optisch unterscheidbaren Phase, welche gasförmig, flüssig oder auch fest sein kann, anzusehen.

Gebräuchlich sind vor allem Vorrichtungen zur Detektion des Höhenstandes einer Flüssigkeit in einem aufrecht stehenden Meßrohr, das nachfolgend als Steigrohr bezeichnet wird. Sie werden in Fachkreisen gemäß einer gebräuchlichen englischen Ausdrucksweise auch als LLD (Liquid Level Detector) bezeichnet. Insbesondere richtet sich die Erfindung auf Anwendungsfälle im Zusammenhang mit Geräten zur Analyse von Körperflüssigkeiten (vor allem Blut und Urin). Dabei geht es insbesondere um die Detektion der Flüssigkeits-Phasengrenze von Proben oder flüssigen Reagenzien.

Soweit sich die Flüssigkeit in einem offenen Gefäß befindet, läßt sich ihr Höhenstand mit Hilfe einer von oben eintauchenden Sonde detektieren, wobei die Sonde zumeist gleichzeitig eine Pipettenspitze ist, durch die ein Reagenz- oder Probenflüssigkeit zugeführt oder abgesaugt werden kann. An der Spitze der Sonde bzw. der Pipette befindet sich ein Flüssigkeitsdetektor, der beim Eintauchen - unter Umständen auch bereits kurz vor dem Eintauchen - in die Flüssigkeit ein Signal erzeugt. Hierfür sind verschiedene Prinzipien bekannt, die beispielsweise auf der Bestimmung des elektrischen Widerstandes oder der elektrischen Kapazität zwischen zwei an der Spitze der Pipette angebrachten Elektroden basieren. Es sind auch bereits optische Prinzipien für derartige Anwendungsfälle diskutiert worden (europäisches Patent 0250671). Bei diesen Verfahren gibt die Position der Sonde bzw. Pipette beim Eintauchen in die Flüssigkeit ein Maß für die Höhe des Flüssigkeitsspiegels.

Die Erfindung richtet sich insbesondere, jedoch nicht ausschließlich, auf die Bestimmung der Flüssigkeits-Phasengrenze in einer Dosiervorrichtung mit einem nach oben hin geschlossenen Steigrohr. Für solche Anwendungsfälle wurden optische Meßprinzipien vorgeschlagen, bei denen das Steigrohr mit einer mindestens eine Lichtquelle aufweisenden Beleuchtungseinrichtung beleuchtet wird, eine Lichtempfangseinrichtung mit mindestens einem Lichtempfänger vorgesehen ist, die einen Teil des durch das Steigrohr bzw. die darin enthaltene Flüssigkeit hindurchtretenden Lichtes empfängt und in von dessen ortsabhängiger Intensitätsverteilung abhängige elektrische Signale umwandelt. Die Signale der Lichtempfangseinrichtung werden einer elektronischen Auswerteeinrichtung zugeführt, um daraus die gewünschte Information über den Höhenstand des Flüssigkeitsspiegels in dem Steigrohr abzuleiten.

Die Realisierung dieses einfach erscheinenden Prinzips verursacht erhebliche Probleme, vor allem wenn der Höhenstand in einem kapillarförmigen Steigrohr mit sehr dünnem Innendurchmesser mit hoher Präzision bestimmt werden soll.

In der deutschen Patentschrift 28 55 651 wird auf die Probleme mit den unterschiedlichen bekannten optischen Meßprinzipien (Bestimmung der Abdunklung durch eine gefärbte Flüssigkeit bzw. der Aufhellung durch eine klare Flüssigkeit; Meniskusabtastung; Reflexions- bzw. Streulichtprinzip) hingewiesen. Es wird eine bestimmte elektronische Schaltung vorgeschlagen, um durch Verbesserung der Signalverarbeitung die optischen Probleme zu kompensieren.

Bei der Detektion von Flüssigkeiten in medizinischen Analysegeräten ist die Problematik vor allem dadurch erschwert, daß die Reagenzien und Proben meist nur sehr wenig gefärbt sind. Darüber hinaus ist die Färbung von Probe zu Probe oder von Reagenz zu Reagenz unterschiedlich, und dennoch soll der Höhenstand unabhängig von diesen Unterschieden präzise erfaßt werden. In der deutschen Patentschrift 28 55 651 wird bereits darauf hingewiesen, daß ein früherer Vorschlag zur Lösung dieser Probleme vorsieht, den Zylinderlinseneffekt der in dem Steigrohr befindlichen Flüssigkeit auszunutzen. Beispielsweise kann das durch das flüssigkeitsgefüllte Rohr fokussierte Licht mittels einer Blende von der Photozelle ferngehalten werden. Wenn der Flüssigkeitsspiegel in dem Steigrohr soweit abfällt, daß die betreffende Stelle des Rohres leer ist, verändert sich die Brennweite dieser Zylinderlinse wobei ein Teil des Lichtes auf die Photozelle trifft.

Auch in der europäischen Patentanmeldung 0185285 wird das Problem der Detektion einer weitgehend transparenten medizinischen Flüssigkeiten diskutiert. Zur Lösung wird auch hier das vorstehend beschriebene Prinzip verwendet, wobei in diesem Fall das flüssigkeitsgefüllte Steigrohr als Linse dient, um ein schmales Lichtband auf eine der Lichtquelle (bezogen auf das Steigrohr) gegenüberliegende Fläche zu fokussieren. Dabei ist es wichtig, daß das Steigrohr eine bestimmte (zylindrische) Form hat und die geometrischen Bedingungen der Fokussierung genau eingehalten werden. Es wird auch eine Ausführungsform beschrieben, bei der die Lichtempfangseinrichtung eine Mehrzahl von Lichtempfängern in Form von Photozellen, Photowiderständen, Photodioden, Phototransistoren oder dergleichen aufweist, die jeweils gegenüber einem Lichtsender parallel zu dem Steigrohr angeordnet sind, so daß sie eine Vielzahl von dicht übereinander angeordneten Lichtschranken bilden. Diese Anordnung ermöglicht zwar eine bequeme Höhenstanderfassung, kann jedoch hinsichtlich der Auflösung und Präzision der Höhenstandsbestimmung nur geringe Ansprüche erfüllen. Es wird mit einem Abstand der lichtempfindlichen Elemente von 1 mm gearbeitet und eine Präzision der Volumenbestimmung in dem Steigrohr von etwa 100 µl erreicht. Daraus ergibt sich, daß ein verhältnismäßig dickes Steigrohr mit einem Innendurchmesser von etwa 5 mm verwendet wurde. Zur Detektion der Phasengrenze in einem kapillarförmigen Meßrohr mit einem Innendurchmesser von beispielsweise weniger als 1 mm ist das in der europäischen Patentanmeldung verwendete, auf der unterschiedlichen Fokussierung des gefüllten und des leeren Meßrohres basierende Prinzip nicht geeignet.

Bei einer in der deutschen Patentanmeldung 36 05 403 beschriebenen Vorrichtung basiert die Detektion des Flüssigkeitshöhenstandes darauf, daß ein kontinuierlicher Übergang der gemessenen Lichtintensität im Bereich des Flüssigkeitsspiegels erreicht wird. Hierzu wird eine parallel zu dem Steigrohr verlaufende linienförmige Lichtquelle in Verbindung mit einer Reihe von unmittelbar an dem Steigrohr vorgesehenen Detektoren verwendet. Es wird als unbedingt erforderlich angesehen, daß ein Unterschied bezüglich der detektierten Lichtintensität zwischen dem flüssigkeitsgefüllten und dem gasgefüllten Bereich des Steigrohres besteht. Dieser Unterschied wird dadurch sichergestellt, daß entweder die Flüssigkeit eingefärbt wird oder (wie bei den zuvor beschriebenen Vorrichtungen) der Zylinderlinseneffekt beim Durchgang des Lichtes durch das Steigrohr genutzt wird.

In dem wissenschaftlichen Artikel "Optical device for the measurement of small volume changes" von A.K. Davies et al. Applied Optics, 1986, 1245 f ist eine Vorrichtung beschrieben, die zur Erfassung des Höhenstandes (und damit des Volumens) in einem Kapillarrohr von 50 µl Volumen dienen soll. Dieser Vorschlag bedingt einen hohen technischen Aufwand. Das Licht wird schmalbandig gefiltert. Es muß ein spezieller Einstrahlwinkel (28°) gewählt werden unter dem das Licht auf die Kapillare auftrifft. Die dahinter liegende Photozelle muß zusätzlich durch spezielle Anordnungen von Blenden abgeschirmt werden. Dennoch ist die Detektion der Phasengrenze zwischen Flüssigkeit und Luft nicht in allen Bereichen der Kapillare möglich, sondern nur die zentralen 20% der Kapillare werden verwendet. Das auf der Auswertung einer analogen Signaländerung basierende Prinzip bedarf einer exakten Kalibration.

Aus dem Dokument Patent Abstracts of Japan, vol. 9, no. 232 (P-389)(1955) 18. September 1985, JP-A-60 086 439 ist eine Vorrichtung zum Messen eines vorgegebenen Probenvolumens für eine Serumanalyse bekannt. Es wird vorgeschlagen, parallele Lichtstrahlen durch das Meßrohr durchtreten zu lassen und mittels Lichtleitelementen auf eine eindimensionale Anordnung lichtempfindlicher Elemente zu lenken. Eine genaue Dosierung kleiner Flüssigkeitsmengen ist damit nicht möglich.

Um ein automatisches, exaktes Dosieren kleiner Flüssigkeitsmengen mit einer genauen, zuverlässigen Bestimmung der Position der Phasengrenze, insbesondere in einem Meßrohr mit sehr kleinem (kapillaren) Durchmesser (insbesondere in Fällen, bei denen sich die optische Helligkeit der Medien auf beiden Seiten der Phasengrenze wenig oder gar nicht unterscheidet) zu ermöglichen, richtet sich die Erfindung gemäß einem ersten Hauptaspekt auf eine Vorrichtung zur Detektion einer Flüssigkeits-Phasengrenze in einem lichtdurchlässigen Meßrohr mit einer Beleuchtungseinrichtung mit mindestens einer Lichtquelle zur Beleuchtung des Meßrohres, einer Lichtempfangseinrichtung mit mindestens einem Lichtempfänger, die durch das Meßrohr hindurchtretendes Licht empfängt und in von dessen ortsabhängiger Intensitätsverteilung abhängige elektrische Signale umwandelt und einer Auswerteeinheit zur Verarbeitung der Signale der Lichtempfangseinrichtung zu einer Information über die Position der Flüssigkeits-Phasengrenze in dem Meßrohr, bei welcher die Beleuchtungseinrichtung zur stetigen Beleuchtung eines Detektionsabschnittes des Meßrohres ausgebildet ist und die Lichtempfangseinrichtung ein optisches Abbildungssystem zur Abbildung des Detektionsabschnittes in eine Bildebene und eine Reihe eng benachbarter lichtempfindlicher Elemente in der Bildebene aufweist.

Die lichtempfindlichen Elemente in der Bildebene des zweckmäßigerweise als optisches Abbildungssystem dienenden Objektivs sind vorzugsweise ein lineares Array von CCD-Elementen (charged coupled devices). Der Abstand der lichtempfindlichen Elemente beträgt vorzugsweise weniger als 50 µm.

Erfindungsgemäß kann die Position einer Flüssigkeits-Phasengrenze in einem Meßrohr mit sehr kleinem Durchmesser von weniger als 1 mm, besonders bevorzugt sogar weniger als 0,5 mm zuverlässig und genau detektiert werden.

Die Erfindung ermöglicht die Positionsbestimmung der Flüssigkeits-Phasengrenze in derartig dünnen Kapillaren ohne bewegliche Teile. Dadurch, daß die Flüssigkeitssäule in dem Meßrohr über einen längeren Detektionsabschnitt mit hoher Auflösung erfaßt wird, ist es zusätzlich möglich, typische Fehlerquellen, wie Luftblasen oder Verunreinigungen, mit Hilfe eines von einer mikroprozessorgesteuerten Auswerteeinrichtung durchgeführten Detektionsalgorithmus zu eliminieren.

Die Beleuchtung des Detektionsabschnittes muß stetig sein in dem Sinne, daß (im Gegensatz zu Lichtschranken) keine plötzlichen Änderungen der räumlichen Verteilung der Beleuchtungsintensität vorkommen. Eine solche stetige Beleuchtung läßt sich mit verschiedenen bekannten Mitteln erreichen, beispielsweise mit Hilfe einer länglich ausgedehnten (zum Beispiel röhrenförmigen), parallel zu dem Meßrohr verlaufenden Lichtquelle, einer Vielzahl von parallel zu dem Meßrohr dicht beieinander angeordneten Lichtquellen oder einer Beleuchtungsoptik, die das Licht einer einfachen Lichtquelle (z.B. Halogenlampe) entsprechend aufweitet. Wesentlich bevorzugt ist jedoch eine Ausführungsform, bei der die Beleuchtungseinrichtung eine Lichtstreueinrichtung, insbesondere mit einer parallel zu dem Meßrohr verlaufenden Mattscheibe (oder anderen Diffusionsfläche) aufweist. Dadurch wird mit geringem konstruktiven Aufwand und ohne exakte Positionierung der Lichtquelle eine besonders genaue Detektion der Phasengrenze ermöglicht.

Der Aufbau ist verhältnismäßig einfach. Es sind keine Blenden, Filter oder Abschirmungen erforderlich. Es kann eine außerordentlich hohe Genauigkeit und Präzision erreicht werden. Beispielsweise wurden mit der Erfindung in einer Kapillare mit einem Innendurchmesser von 0,2 mm und einem Abstand der CCD-Elemente (Pixel) von 25 µm Volumenunterschiede von +/- 1 nl zuverlässig detektiert.

Das System arbeitet ohne bewegliche Teile und verzögerungsfrei. Es ist möglich, die zeitliche Änderung der Position der Phasengrenze genau zu erfassen und beispielsweise deren Bewegungsgeschwindigkeit zu bestimmen.

Die Erfindung richtet sich auf eine Vorrichtung zum automatischen exakten Dosieren kleiner Flüssigkeitsmengen. Solche Vorrichtungen werden auch als (automatische) Pipettoren bezeichnet. Sie werden im Zusammenhang mit der Analyse von Körperflüssigkeiten, insbesondere bei entsprechenden Analysegeräten, vielfach verwendet, um Proben und Reagenzien von einem Gefäß in ein anderes Gefäß zu transferieren. Die Dosierung der Flüssigkeit basiert dabei auf der Bewegung eines Kolbens in einem Präzisionsrohr. Der Kolben wird in der Regel von einem Schrittmotor angetrieben, dessen Bewegung über einen Zahnriemen auf einen Spindelantrieb übertragen wird. Dieser Spindelantrieb bewegt einen Schlitten, der üblicherweise fest mit dem Kolben verbunden ist. Die Präzision der Dosierung mit einer solchen Kolbenpumpe ist abhängig von der Präzision des Schrittmotors und der Genauigkeit der Übertragungselemente (Zahnriemen, Spindelantrieb). Um eine hohe Präzision zu gewährleisten, müssen die mechanischen Teile sehr genau gefertigt werden und sind demzufolge teuer. Die mechanisch beweglichen Teile können verschleißen und müssen, um die Genauigkeit zu gewährleisten, regelmäßig gewartet werden. Zusätzliche Fehler hinsichtlich der Dosierungspräzision können durch Unterschiede in der Konsistenz, Zähigkeit oder dem Fettgehalt der zu dosierenden Flüssigkeit entstehen. Solche Unterschiede sind bei Blut und den in der medizinischen Analytik gebräuchlichen Reagenzflüssigkeiten, welche Proteine und andere Riesenmoleküle enthalten, besonders ausgeprägt.

Die Erfindung stellt einen automatischen Pipettor mit hoher Genauigkeit, insbesondere zur Dosierung von sehr kleinen Probenvolumina zur Verfügung. Sie weist eine Phasengrenzdetektionsvorrichtung ("Phase Boundary Detection Means, PBDM") auf, durch die eine Flüssigkeits-Phasengrenze in einem Meßrohr automatisch detektiert und ein der Position der Phasengrenze in einem Detektionsabschnitt des Meßrohres entsprecnendes elektrisches Signal erzeugt wird. Mit einem ersten Ende des Meßrohres steht eine Flüssigkeitstransferöffnung zum Ansaugen und Ausstoßen von Flüssigkeit in Fluidverbindung. Mit einem zweiten Ende des Meßrohres steht eine Hilfsfluid-Transfereinrichtung (Auxiliary Fluid Transfer Means, AFTM) zum präzise gesteuerten Zuführen und Absaugen eines Hilfsfluids zu bzw. von dem Meßrohr in Fluidverbindung. Sie weist Mittel zum Zuführen von Hilfsfluid (Auxiliary Fluid Supply Means, AFSM) und Mittel zum Absaugen von Hilfsfluid (Auxiliary Fluid Withdrawl Means, AFWM) auf. Eine elektronische Steuereinheit ist vorgesehen, um die Hilfsfluid-Transfereinrichtung in Abhängigkeit von dem der Position der Flüssigkeits-Phasengrenze entsprechenden Signal derart anzusteuern, daß durch Absaugen bzw. Zuführen von Hilfsfluid zu dem Meßrohr präzise definierte Flüssigkeitsmengen angesaugt bzw. ausgestoßen werden.

Die Detektionsvorrichtung zur Detektion der Flüssigkeits-Phasengrenze ist gemäß Anspruch 1 ausgebildet. Dabei kann ein dünnes Kapillarröhrchen als Meßrohr verwendet werden, welches unmittelbar in die Flüssigkeit eingetaucht wird, wobei die Höhe des Flüssigkeitsspiegels mit dem LLD gemäß der Erfindung in relativ kurzem Abstand über der Ansaugöffnung präzise bestimmt wird. Da das Probevolumen dabei direkt in dem als Pipettenspitze dienenden Kapillarrohr gemessen werden kann und deswegen das angesaugte Volumen direkt und unmittelbar bestimmt wird, bleiben unterschiedliche Bedingungen, wie Luftdruck, Raumtemperatur oder Viskosität der Flüssigkeit praktisch ohne Einfluß auf die Dosierpräzision.

Dabei kann das Meßrohr als einmalverwendbare (disposible) Kapillare ausgebildet sein, welche in eine automatische Halterung des Pipettors eingesetzt wird. Hierdurch wird das Risiko der Übertragung von Flüssigkeitsresten auf das jeweils nächste dosierte Flüssigkeitsvolumen ("Verschleppung") vollständig vermieden. Bei vorbekannten Konstruktionen führten disposible Pipettenspitzen an automatischen Pipettoren infolge unvermeidlicher Unterschiede der Ankopplung an den Pipettor zu großen Präzisionsproblemen beim Pipettieren von sehr kleinen Volumina.

In Verbindung mit dem Pipettor gemäß der Erfindung kann ein LLD eingesetzt werden, der den Höhenstand einer Flüssigkeit in einem nach oben geschlossenen Steigrohr automatisch detektiert und ein resultierendes elektrisches Signal erzeugt, welches der Steuereinheit zugeführt wird, um das Ansaugen und Ausstoßen der Flüssigkeit präzise zu kontrollieren. Bekannte Vorrichtungen dieser Art wurden einleitend erwähnt.

Das Hilfsfluid kann ein Gas oder eine Flüssigkeit sein. Eine Flüssigkeit kann zweckmäßigerweise mit Hilfe einer Kolbenpumpe präzise gesteuert zugeführt bzw. abgesaugt werden. Wenn die Hilfsflüssigkeit mit der zu dosierenden Flüssigkeit nicht mischbar ist, kann an der Phasengrenze ein unmittelbarer Kontakt zwischen beiden Flüssigkeiten bestehen. Auch mit einer mischbaren Flüssigkeit kann gearbeitet werden, indem man zwischen Hilfsflüssigkeit und zu dosierender Flüssigkeit eine Gasblase ansaugt. Diese Trennung zweier unterschiedlicher Flüssigkeiten mit Hilfe einer Gasblase ist in der Analysetechnik gebräuchlich. In diesem Fall wird eine der Phasengrenzen zwischen der zu dosierenden Flüssigkeit oder der Hilfsflüssigkeit und der Gasblase detektiert.

Bevorzugt ist eine Ausführungsform, bei der das Hilfsfluid ein Gas, insbesondere Luft ist und das Meßrohr als Steigrohr im wesentlichen vertikal verläuft. Die Phasengrenze ist dabei der Flüssigkeitsspiegel, der die Flüssigkeitssäule in dem Steigrohr von dem darüber befindlichen Gasraum trennt, dem das gasförmige Hilfsfluid zugeführt bzw. von dem es abgesaugt wird. In diesem Fall weist die Transfereinrichtung für das Hilfsfluid vorzugsweise eine Umschaltventileinrichtung auf, die aus einem Mehrwege-Ventil oder mehreren Einzelventilen bestehen kann. In jedem Fall sollte mindestens ein Absperrventil (d.h. ein Ventil, welches schnell zwischen einer Offen- und Geschlossenstellung wechselt) dicht beim oberen Ende des Steigrohres angeordnet sein.

Der erfindungsgemäße automatische Pipettor ist besonders geeignet zum vollautomatischen Pipettieren sehr kleiner Flüssigkeitsmengen (im Bereich zwischen 20 nl und 20 µl, d.h. 2 x 10⁻⁸ l bis 2 x10⁻⁵ l). Dabei wird eine sehr hohe Präzision erreicht. Bei 100 nl Dosiervolumen liegt der Variationskoeffizient (VK) beispielsweise bei maximal 1 % (d.h. 10⁻¹⁰l). Dabei wird als Meßrohr eine dünne Kapillare mit einem Innendurchmesser zwischen 0,1 mm und 0,3 mm verwendet, die unmittelbar in die zu pipettierende Flüssigkeit eingetaucht (d.h. die Flüssigkeitstransferöffnung ist ein Bestandteil des Meßrohres).

Die Kontrolle einer dosierten Flüssigkeitsmenge mittels eines optischen LLD ist aus der deutschen Patentschrift 35 15 890 bekannt. Die dort beschriebene Vorrichtung erlaubt jedoch nur eine verhältnismäßig grobe Dosierung einer relativ großen Flüssigkeitsmenge (0,3 ml = 300 µl). Die Funktion unterscheidet sich in wesentlichen Elementen von der hier beschriebenen Vorrichtung. Insbesondere wird die Flüssigkeit mittels einer dem Meßrohr nachgeschalteten Injektor-Sprühdüse aus dem Meßrohr abgesaugt. Es sind weder Mittel zum Zuführen noch zum Absaugen eines Hilfsfluid an dem der Flüssigkeitstransferöffnung gegenüberliegenden Ende des Meßrohres angeschlossen. Mit der vorbekannten Vorrichtung ist es nicht möglich, eine schnelle und verschleppungsarme Dosierung einer Folge unterschiedlicher Flüssigkeiten durchzuführen, wie dies bei klinischen Analysegeräten erforderlich ist. Ebenso ist es unmöglich, damit Flüssigkeiten zu dosieren, die in sehr geringen Mengen vorliegen und daher praktisch ohne Totvolumen dosiert werden müssen.

Die Funktion des erfindungsgemäßen automatischen Pipettors wird durch mechanischen Verschleiß praktisch nicht beeinträchtigt. Umschaltventile unterliegen nur einem geringen Verschleiß, der ihre Funktion über eine hohe Lebensdauer nicht beeinflußt. Wird gemäß einer bevorzugten Ausführungsform eine Gaspumpe als Gasabsaugeinrichtung und/oder Gaszufuhreinrichtung verwendet, so unterliegt zwar auch diese einem mechanischen Verschleiß, der jedoch für die Präzision der Dosierung unbedeutend ist. Es kann eine einfache und verhältnismäßig preisgünstige Gaspumpe verwendet werden.

Außerdem ist eine permanente Überprüfung möglich, ob die angesaugte bzw. ausgestoßene Flüssigkeitsmenge mit der gewünschten vorbestimmten Menge übereinstimmt. Bei herkömmlichen automatischen Pipettoren können dagegen beispielsweise Fehler durch Verstopfung der Nadel oder dadurch, daß der Schrittmotor einzelne Schritte "verliert" nicht oder nur mit aufwendigen Zusatzeinrichtungen erkannt werden.

Die erfindungsgemäße Vorrichtung arbeitet mit unterschiedlichen Dosierflüssigkeiten, insbesondere Blut, Serum und proteinhaltigen Reagenzflüssigkeiten einwandfrei, auch wenn diese sich in ihrer Zusammensetzung,

Viskosität und Hydrophobizität (Oberflächenspannung) erheblich unterscheiden. Änderungen der Flüssigkeiten haben praktisch keinen Einfluß auf die Pipettierpräzision. Auch Änderungen der Umgebungsbedingungen (zum Beispiel Temperaturänderungen) können im Gegensatz zu herkömmlichen Pipettoren relativ leicht in dem Steuerungsalgorithmus berücksichtigt und dadurch eliminiert werden.

Die Erfindung wird im folgenden anhand eines in den Figuren schematisch dargestellten Ausführungsbeispieles näher erläutert; es zeigen:
- Fig. 1: Eine Prinzipdarstellung eines automatischen Pipettors mit Flüssigkeitsspiegeldetektionsvorrichtung;
- Fig. 2 bis Fig. 5: Prinzipdarstellungen unterschiedlicher Anordnungen der Beleuchtungseinrichtung und der Lichtempfangseinrichtung bei einer erfindungsgemäßen Flüssigkeitsspiegeldetektionsvorrichtung;
- Fig. 6: eine Meßkurve einer gemessenen Intensitätsverteilung in Abhängigkeit vom Ort des lichtempfindlichen Elementes in der Bildebene,
- Fig. 7: eine praktische Ausführungsform einer Vorrichtung gemäß Fig. 1 in Seitenansicht.

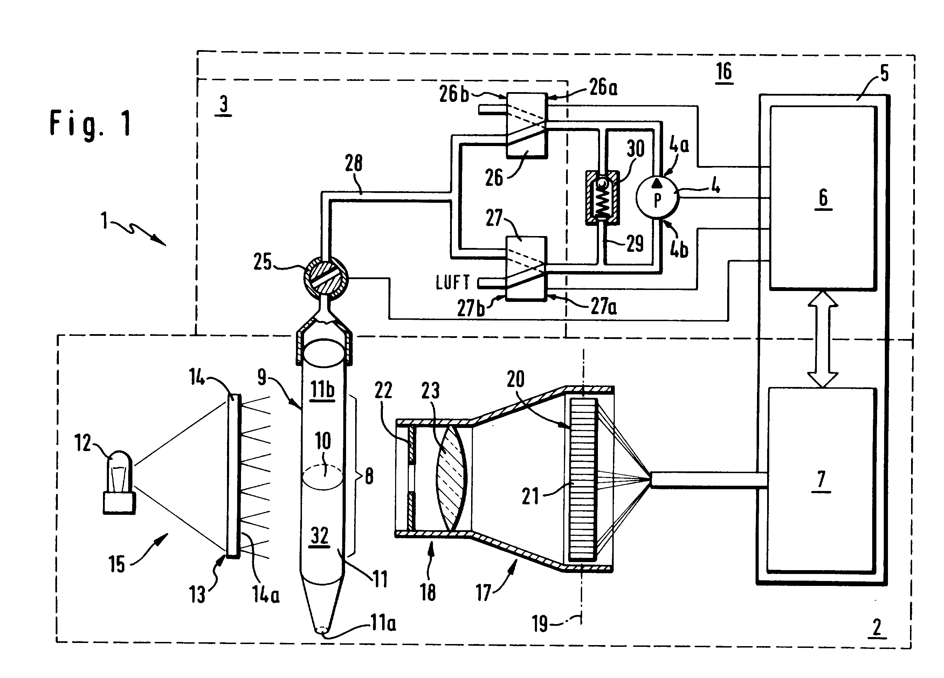

Der in Figur 1 dargestellte automatische Pipettor 1 besteht im wesentlichen aus einer Detektionsvorrichtung 2 zur Detektion einer Flüssigkeits-Phasengrenze 10 in dem Detektionsabschnitt 8 eines Meßrohres 9, sowie eine Hilfsfluid-Transfereinrichtung 16, zu der eine Umschaltventileinrichtung 3 und eine Gaspumpe 4 gehört. Eine elektronische Zentraleinheit 5 schließt eine Steuereinheit 6 für die Gaspumpe 4 und die Umschaltventileinrichtung 3 sowie eine Auswerteeinheit 7 für die Detektionsvorrichtung 2 ein.

Die Detektionsvorrichtung 2 ist im dargestellten Fall eine Flüssigkeitsspiegeldetektionsvorrichtung (LLD), d.h. die Phasengrenze 10 ist die Grenze zwischen Luft und Flüssigkeit in einem als vertikales Steigrohr 11 ausgebildeten Meßrohr 9. Der LLD dient dazu, die Höhe des Flüssigkeitsspiegels 10 in dem Steigrohr 11 automatisch zu detektieren. Zu diesem Zweck wird das Steigrohr 11 von einer Lichtquelle 12 über eine Lichtstreueinrichtung 13 mit diffusem Licht beleuchtet. Die Lichtstreueinrichtung 13 ist im dargestellten Fall eine Mattscheibe 14, wobei das Steigrohr 11 auf der von der Lichtquelle 12 abgewandten Seite der Mattscheibe 14 liegt und die Mattscheibe 14 und das Steigrohr 11 etwa parallel zueinander angeordnet sind. Insgesamt bilden die Lichtquelle 12 und die Lichtstreueinrichtung 13 eine Beleuchtungseinrichtung 15 zur Beleuchtung des Steigrohres 11.

Auf der der Beleuchtungseinrichtung 15 gegenüberliegenden Seite des Steigrohres 11 befindet sich eine Lichtempfangseinrichtung 17, welche aus einem optischen Abbildungssystem 18 zur Abbildung des Steigrohres in eine Bildebene 19 und einer in der Bildebene 19 angeordneten Reihe 20 von lichtempfindlichen Elementen besteht, die im dargestellten bevorzugten Fall CCD-Elemente (Pixel) 21 sind.

Die Lichtquelle 12 kann aus einer oder mehreren Lampen, beispielsweise Halogenlampen, Wolframlampen oder dergleichen bestehen. Die Lichtstreueinrichtung ist bevorzugt eine von der Rückseite her beleuchtete Mattscheibe 14, jedoch ist die im Rahmen der Erfindung bevorzugte diffuse Beleuchtung des Steigrohres 11 beispielsweise auch mit einer diffus reflektierenden Fläche realisierbar, welche von der Seite her derartig beleuchtet wird, daß vorzugsweise kein Licht der Lichtquelle direkt auf das Steigrohr 11 fällt. Sowohl im Falle einer Mattscheibe als auch im Falle einer diffus reflektierenden Fläche sollte die dem Steigrohr 11 zugewandte Oberfläche, welche als Diffusionsfläche 14a bezeichnet werden kann, in gleichmäßigem Abstand (d.h. etwa parallel) zu diesem verlaufen.

Das Steigrohr 11 ist vorzugsweise eine Kapillare mit einem Innendurchmesser von weniger als 1 mm, besonders bevorzugt weniger als 0,5 mm. Sein unteres Ende steht in Fluidverbindung mit einer Flüssigkeitstransferöffnung lla, durch die die Flüssigkeit angesaugt und ausgestoßen werden kann. "Steht in Fluidverbindung (fluid communication)" ist dabei so zu verstehen, daß die FlüsSigkeitstransferöffnung 11a - wie dargestellt - eine Öffnung des Steigrohres 11 selbst sein oder auch mittels eines Rohres oder Schlauches in indirekter Verbindung mit dem Steigrohr 11 stehen kann.

Das optische Abbildungssystem 18 besteht zweckmäßigerweise aus einer Blende 22 und einem (in der Zeichnung nur als eine Linse angedeuteten) Objektiv 23.

Die Reihe lichtempfindlicher Elemente kann unter Umständen auch Teil einer zweidimensionalen Anordnung sein, die sich nicht nur parallel zu dem Steigrohr 11, sondern auch senkrecht dazu in der Bildebene 19 erstreckt. Als ausreichend und besonders zweckmäßig hat sich jedoch eine rein lineare Anordnung der CCD-Pixel erwiesen, wobei deren Abstand weniger als 50 µm, bevorzugt maximal 25 µm beträgt.

Bei der dargestellten Ausführungsform befinden sich die Lichtquelle 12, das Steigrohr 11 und die Reihe 20 der CCD-Pixel 21 in einer Ebene. Bei dieser Anordnung (und Dosierung einer klaren Flüssigkeit) liefern CCD-Pixel, auf die der flüssigkeitsgefüllte Bereich der Kapillare abgebildet wird, ein höheres Ausgangssignal als die Pixel, auf die der luftgefüllte Bereich der Kapillare abgebildet wird.

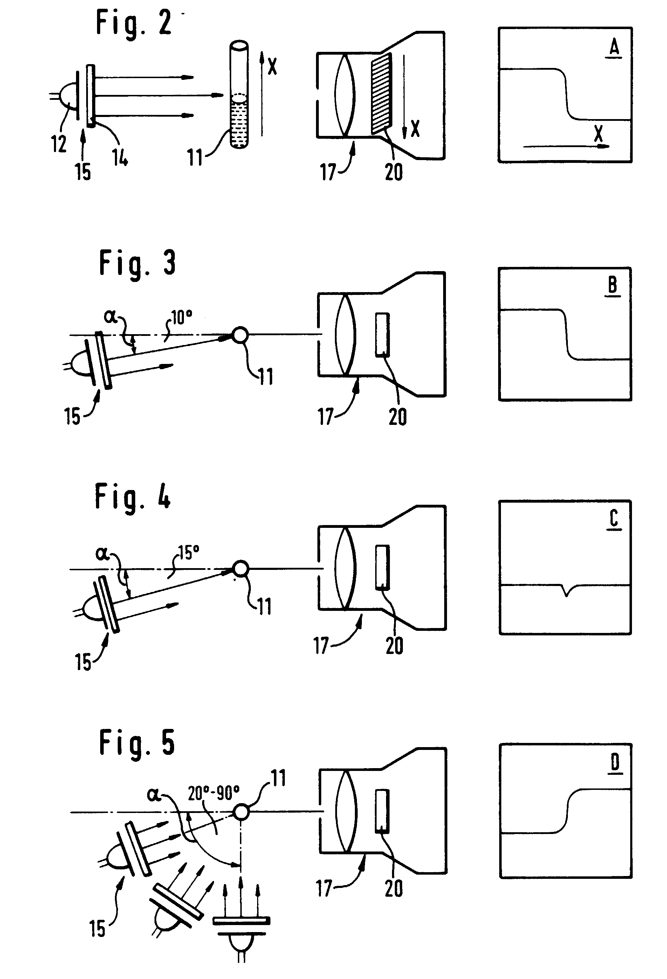

Dieser Sachverhalt wird durch Fig. 2 verdeutlicht. Neben einer der Figur 1 entsprechenden Darstellung des LLD zeigt sie eine graphische Darstellung A der Ausgangssignale der CCD-Pixel 21 in Abhängigkeit von dem Ort X des Kapillar-Steigrohres 11, der auf sie abgebildet ist.

Die graphische Darstellung A zeigt diesen Zusammenhang allerdings stark vereinfacht. In Wahrheit sind die Signalunterschiede wesentlich geringer.

In einem Versuchsaufbau der Erfindung wurde eine 12,5 cm lange Kapillare mit einem Innendurchmesser von 400 µm als Steigrohr 11 verwendet. Als Lichtquelle 12 diente eine Halogenlampe, die Lichtstreueinrichtung 13 wurde von einer hellen Mattscheibe gebildet, welche im Abstand von 7 cm parallel zu dem Steigrohr 11 verlief. Die Reihe 20 der lichtempfindlichen Elemente bestand aus einem CCD-Zeilensensor mit 1024 Pixeln mit einer Abmessung von 0,025 mm x 1 mm. Als optisches Abbildungssystem diente ein Kameraobjektiv mit f=1,8 und 50 mm Brennweite. Der Abstand zwischen der Lichtquelle 12 und der Bildebene 19 betrug etwa 20 cm, wobei das Steigrohr 11 etwa in der Mitte angeordnet war.

Das Ausgangssignal des CCD-Zeilensensors wurde über ein Interface an einen Standard-Personalcomputer transferiert, der als Auswerteeinrichtung 7 diente. Die Zuordnung der CCD-Ausgangssignale zu den Werten "Kapillare gefüllt" bzw. "Kapillare leer" erfolgte mit Hilfe eines entsprechend gelegten Schwellwertes. Das Interface sollte eine Parallelverarbeitung der Daten ermöglichen, damit die Position des Flüssigkeitsspiegels in Real time gewährleistet ist.

Mit diesem Aufbau konnte der Luft-Flüssigkeits-Übergang in dem Steigrohr 11 mit einer Genauigkeit von +/- 1 Pixel detektiert werden.

Weitere Experimente haben ergeben, daß mit zusätzlichen Optimierungsmaßnahmen, insbesondere einem vergrößernden optischen Abbildungssystem 18 und durch Verwendung einer CCD-Zeile mit geringerem Pixelabstand die Auflösung bei der Detektion des Flüssigkeitsspiegels 10 in dem Steigrohr 11 noch weiter verbessert werden kann. Dies gilt selbst bei Kapillaren mit einem Innendurchmesser von 0,2 mm bei Verwendung des in Fig. 1 und 2 dargestellten prinzipiellen Aufbaus. Dabei können Volumenunterschiede von weniger als +/- 1 nl detektiert werden. Dieses vorteilhafte Ergebnis muß in Anbetracht der schwierigen Bedingungen, insbesondere bei der Detektion des Spiegels einer nicht gefärbten Flüssigkeit, als überraschend angesehen werden. Dies bestätigt sich auch dadurch, daß in dem einleitend beschriebenen Stand der Technik wesentlich aufwendigere Verfahren verwendet und dennoch erheblich schlechtere Ergebnisse erreicht werden.

Die graphischen Darstellungen B,C,D der Figuren 3 bis 5 verdeutlichen die Abhängigkeit des Meßsignals von der Winkelposition der Lichtquelle 12 und der Lichtstreueinrichtung 13. Dabei ist jeweils eine Aufsicht dargestellt, die Achse des Steigrohres 11 verläuft also senkrecht zur Zeichenebene. Bei Änderung des in den Figuren eingezeichneten Azimut-Winkels α (bezogen auf eine zu dem Steigrohr 11 senkrechte Ebene) verringert sich die Differenz der Pixel-Ausgangssignale, die dem flüssigkeitsgefüllten und dem luftgefüllten Abschnitt des Steigrohres 11 entsprechen.

Im dargestellten Fall verringert sich bei Azimutwinkeln α größer als 10° die Differenz zwischen der flüssigkeitsgefüllten und der luftgefüllten Kapillare zunehmend und bei Winkeln über 15° dreht sich das Verhältnis um: CCD-Pixel, auf die das Bild des luftgefüllten Abschnittes des Steigrohres 11 abgebildet wird, haben ein höheres Ausgangssignal als solche, die dem flüssigkeitsgefüllten Abschnitt der Kapillare entsprechen. In einem zweiten Winkelbereich zwischen 20° und 90°, der in Figur 5 dargestellt ist, besteht deshalb wiederum eine Signaldifferenz. Sie ist in diesem Bereich jedoch etwas geringer, als bei der Anordnung in einer Ebene gemäß Figur 2.

Wenn die Meßanordnung so gestaltet ist, daß sich die Helligkeit des flüssigkeitsgefüllten Teilbereiches und des gasgefüllten Teilbereiches des Meßabschnittes des Steigrohres 11 deutlich unterscheiden (wie bei Figur 2, 3 und 5), ist die Auswertung des Ausgangssignals der Reihe 20 der lichtempfindlichen Elemente 21 besonders einfach. Wie erwähnt genügt es im allgemeinen, einen Schwellwert so zu legen, daß er etwa in der Mitte zwischen den Ausgangssignalen liegt, die der gefüllten bzw. der leeren Kapillare entsprechen. Dabei läßt sich eine sehr gute Genauigkeit erreichen, ohne daß eine hochpräzise Justierung der Bauteile erforderlich ist. Wie aus den Figuren 2 bis 5 schematisch hervorgeht, ändern sich die Intensitäten über verhältnismäßig breite Winkelbereiche nur geringfügig.

Auch eine geringfügige Verkippung der Beleuchtungseinrichtung 15 um eine horizontale (in der Zeichenebene der Figuren 3 bis 5 verlaufende) Achse von bis zu 10° beeinträchtigt die Qualität der Detektion nicht wesentlich. Auch hieran zeigt sich die Toleranz der beschriebenen Technik gegen Positionierungsungenauigkeiten.

Ein besonderer Vorteil der erfindungsgemäßen Phasengrenze-Detektionsvorrichtung (PBDM) besteht darin, daß sie auch in solchen Fällen noch eine exakte Lokalisierung der Phasengrenze ermöglicht, in denen sich die Helligkeit der an die Phasengrenze angrenzenden Bereiche des Meßrohres nicht oder nur sehr geringfügig unterscheidet.

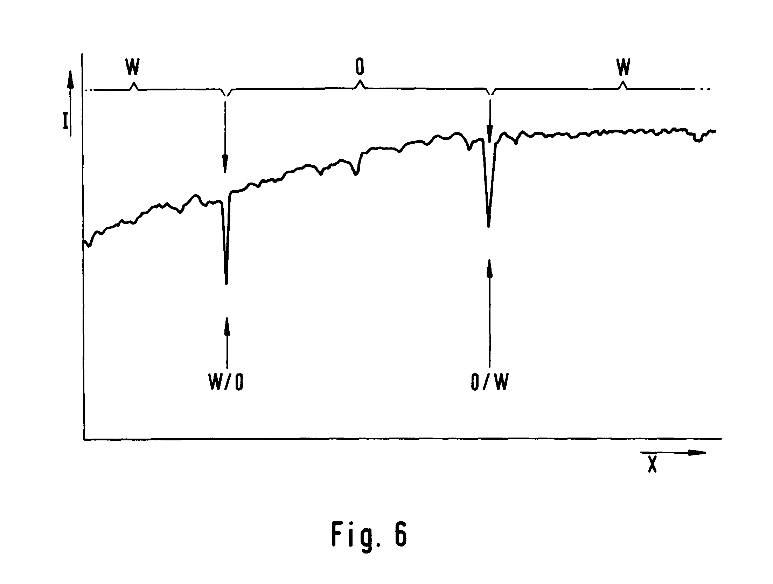

Figur 6 zeigt das Signal der CCD-Pixel bei einem Experiment, bei dem der auf die CCD's abgebildete Meßabschnitt 8 eines Meßrohres 9 in aufeinanderfolgenden Teilbereichen Wasser (W), Silan-Öl (O) und nochmals Wasser (W) enthält. Das Öl mischt sich nicht mit Wasser, so daß sich zwischen dem Wasser und dem Öl Phasengrenzen W/O bzw. O/W ausbilden.

Der Verlauf der Intensität I in Abhängigkeit vom Meßort X ist in Figur 6 leicht gekrümmt. Dies ist darauf zurückzuführen, daß die Beleuchtung des Detektionsabschnitts bei dem dieser Figur zugrundeliegenden Experiment nicht vollständig konstant war, sondern von unten nach oben leicht zunahm. Dies ist für die Auswertegenauigkeit bei Verwendung eines geeigneten Auswerteverfahrens (wie beispielsweise den nachfolgend beschriebenen) ohne Bedeutung. Wesentlich ist jedoch, daß die Beleuchtung (wie bereits erläutert) stetig ist.

Aus der Figur ist zu erkennen, daß die gemessenen Intensitäten in der Nachbarschaft der Phasengrenzen im Öl und im Wasser sich praktisch nicht unterscheiden. Dennoch werden an der Phasengrenze selbst gut meßbare Minima der Intensität festgestellt, die von der Auswerteeinheit ausgewertet werden können, um den Ort der Phasengrenze zu detektieren. Dazu werden vorzugsweise die gemessenen Ausgangssignale der CCD-Pixel zunächst einer digitalen Tiefpaßfilterung unterzogen. Derartige Verfahren, beispielsweise mit Hilfe einer Hamming-, Blackman-, oder HanningFensterfunktion sind bekannt. Sie führen zu einer Glättung des Signalverlaufes. Dadurch werden falsche Anzeigen einer Phasengrenze aufgrund von zufälligen Signalschwankungen vermieden.

In dem gefilterten Signalverlauf kann das Signalminimum wiederum mit Hilfe eines Grenzwertes bestimmt werden. Dieser wird zweckmäßigerweise um ein Mehrfaches der statistischen Schwankungsbreite der Pixel-Signale unterhalb des Signalmittelwertes einer definierten Nachbarschaft (von beispielsweise 10 Pixeln) gelegt. Eine unterhalb dieses Grenzwertes liegende Intensität wird als Phasengrenze erkannt.

Um die Detektion der Phasengrenze auch in kritischen Fällen zusätzlich zu verbessern, kann es zweckmäßig sein, den gefilterten Signalverlauf zu differenzieren und in dem daraus resultierenden Signalverlauf (d.h. in der ersten Ableitung des gemessenen Signalverlaufes) eine Schwelle zur Erkennung der Phasengrenze zu setzen.

Wie erwähnt umfaßt der in Figur 1 dargestellte automatische Pipettor 1 neben dem LLD 2 die Umschaltventileinrichtung 3, die Gaspumpe 4 und die zugehörige Steuereinheit 6. Die Umschaltventileinrichtung 3 besteht in der dargestellten bevorzugten Ausführungsform aus einem schnellen Absperrventil 25 und zwei Umschaltventilen 26 und 27.

Die Ventile 26, 27 weisen jeweils auf einer ersten Seite 26a,27a einen Anschluß und auf einer zweiten Seite 26b,27b zwei Anschlüsse auf, wobei durch Umschalten des Ventils wahlweise eine Verbindung zwischen dem einen Anschluß der ersten Seite und einem der Anschlüsse der zweiten Seite hergestellt wird. Die erste Seite 26a des Ventils 26 ist mit der Druckseite 4a der Gaspumpe 4 verbunden, während die erste Seite 27a des Ventils 27 mit der Ansaugseite 4b der Gaspumpe in Verbindung steht.

Von den beiden Anschlüssen der zweiten Seite der Ventile 26,27 ist jeweils einer an ein Y-Leitungssystem 28 angeschlossen, durch das eine Verbindung zu dem von dem Steigrohr 11 abgewandten Anschluß des Absperrventiles 25 hergestellt wird. Der jeweils andere Anschluß der zweiten Seite 26b,27b der Ventile 26,27 ist mit der Außenluft verbunden. Die Ventile 26,27 werden synchron so umgeschaltet, daß in einer ersten Stellung (in der Figur mit durchgezogenen Linien dargestellt) die Druckseite der Gaspumpe 4 mit dem Absperrventil 25 verbunden ist, während in einer zweiten Stellung (in der Figur gestrichelt dargestellt) die Ansaugseite 4b mit dem Absperrventil 25 verbunden ist. Zur Begrenzung des von der Gaspumpe 4 erzeugten Drucks ist ein Bypass 29 mit mindestens einem Druckbegrenzungsventil 30 vorgesehen.

Um durch die Flüssigkeitstransferöffnung 11a des Steigrohres 11 Flüssigkeit anzusaugen, werden die Umschaltventile 26,27 in die gestrichelt dargestellte Position gebracht, so daß ein von der Gaspumpe 4 erzeugter Unterdruck an dem Absperrventil 25 anliegt. Beim Öffnen dieses Ventils wird eine Verbindung zu dem Gasraum 11b des Steigrohres 11 oberhalb des Flüssigkeitsspiegels 10 hergestellt. Die Flüssigkeit wird angesaugt und der Flüssigkeitsspiegel 10 steigt unter Kontrolle des LLD 2 an. Sobald der Flüssigkeitsspiegel 10 einen dem gewünschten Ansaugvolumen entsprechenden Höhenstand erreicht hat, wird das Ventil 25 geschlossen. Das Ventilsteuersignal wird von der Steuereinheit 6 in Abhängigkeit von einem von der Auswerteeinheit 7 generierten elektrischen Signal, welches dem Höhenstand des Flüssigkeitsspiegels 10 entspricht, durch Vergleich mit einem dem gewünschten Höhenstand entsprechenden Sollwert erzeugt.

Überraschenderweise hat sich gezeigt, daß mit einer solchen Anordnung der Flüssigkeitsspiegel 10 mit einer sehr hohen Präzision in eine definierte Position gebracht werden kann. Wichtig ist dabei, daß ein ausreichend schnelles Absperrventil 25 eingesetzt wird. Praktisch bewährt hat sich ein schnelles Magnetventil (Lee-Ventil) mit einer Schaltfrequenz von 2000 Hz. Außerdem sollte das Absperrventil 25 möglichst dicht am oberen Ende des Steigrohres angeordnet sein. Vorzugsweise sollte das Totvolumen zwischen dem oberen Ende des Detektionsabschnittes 8 und dem Absperrventil 25 höchstens so groß wie das Innenvolumen des Detektionsabschnittes 8 des Meßrohres 9 sein.

Die Umschaltventileinrichtung 3 kann, wie dem Fachmann geläufig ist, auch in anderer Weise aufgebaut sein, beispielsweise mit Hilfe eines Vierwege-Ventils oder von vier Einwegeventilen, welche synchron so geschaltet werden, daß jeweils zum gewünschten Zeitpunkt Gas dem Gasraum 11b zugeführt bzw. von diesem abgeführt wird.

Bei der in Figur 1 dargestellten Ausführungsform wird das Ansaugen in das Meßrohr 9 bzw. das Ausstoßen aus dem Meßrohr 9 durch Zu- bzw. Abfuhr eines Gases als Hilfsfluid gesteuert. Die Phasengrenze 10 ist dabei eine Grenzfläche zwischen der in dem unteren Teil des Meßrohres 9 befindlichen Flüssigkeitssäule 32 und der in dem Gasraum 11b befindlichen Luft. Alternativ kann jedoch wie erwähnt auch eine Flüssigkeit statt des Gases (der Luft) verwendet werden. Bei einer solchen Dosiereinrichtung wäre statt der Gaspumpe eine Flüssigkeitspumpe (beispielsweise eine Kolbenpumpe) vorgesehen, welche aus einem Flüssigkeitsvorratsbehälter Flüssigkeit ansaugt bzw. in diesen oder einen anderen Behälter abgibt. Obwohl somit unterschiedliche Fluide (Gase oder Flüssigkeiten) eingesetzt werden können, um als Hilfsfluid die zu dosierende Flüssigkeit in das Meßrohr 9 anzusaugen oder aus diesem auszustoßen, ist die Ausführungsform mit einem Gas (insbesondere Luft) besonders bevorzugt, weil sie besonders einfach ist und jeden Kontakt der zu dosierenden Flüssigkeit mit einer anderen Flüssigkeit ausschließt.

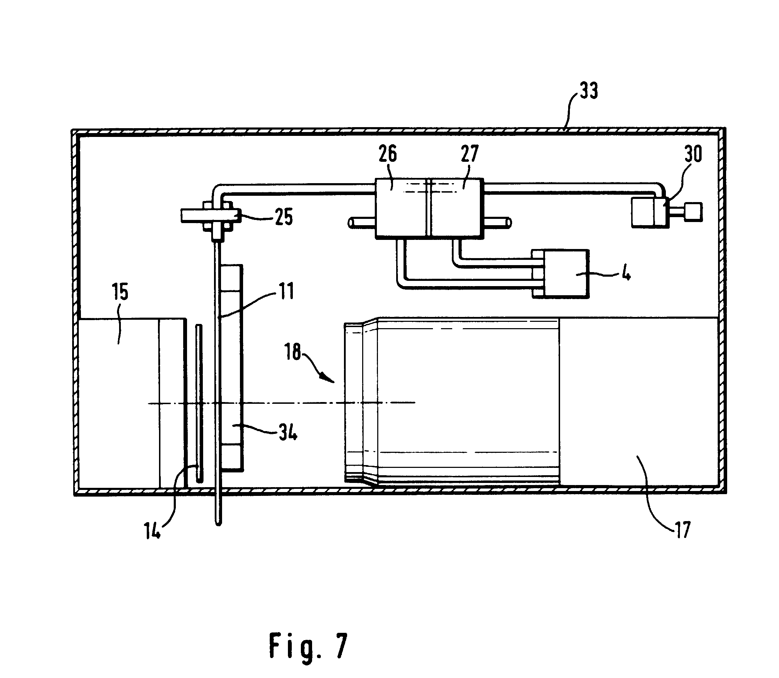

Bei der in Figur 7 dargestellten praktischen Ausführungsform einer automatischen Pipettiervorrichtung sind die Bauteile an einem gemeinsamen Rahmen 33 befestigt. Die Beleuchtungseinrichtung 15 hat ein lichtdicht geschlossenes Gehäuse, in dem sich die nicht dargestellte Lichtquelle befindet. An der dem Steigrohr 11 zugewandten Seite der Beleuchtungseinrichtung 15 ist die Mattscheibe 14 befestigt. Auch die Lichtempfangseinrichtung 17 ist einschließlich des optischen Abbildungssystems 18 in einem gemeinsamen lichtdicht geschlossenen Gehäuse untergebracht. Die Verbindungsleitungen zwischen der Gaspumpe 4, den Umschaltventilen 25,26, dem Druckbegrenzungsventil 30 und dem Magnetventil 25 werden durch Schläuche gebildet. Das Steigrohr 11 ist eine sehr dünne Kapillare, die mittels eines Tragteils 34 an dem Rahmen 33 befestigt ist.

Bei der dargestellten Ausführungsform ist das Steigrohr 11 fixiert. Es kann daher bei den Pipettiervorgängen nicht auf- und abwärts bewegt werden. Falls eine solche Bewegung gewünscht wird, läßt sie sich im Rahmen der vorliegenden Erfindung entweder dadurch realisieren, daß das Steigrohr 11 in präzise vorherbestimmter und meßbarer Art und Weise auf- und abwärts bewegt wird und diese Bewegung durch die Auswerteeinheit 7 bei der Berechnung des Höhenstandes (und des resultierenden Volumens) im Steigrohr berücksichtigt wird. Eine zweite Möglichkeit besteht darin, ein festes Steigrohr zu verwenden und an dessen unteres Ende über einen biegsamen Schlauch eine separat bewegliche Pipettiernadel mit der Flüssigkeitstransferöffnung anzuschließen.

## Patentansprüche

1. Vorrichtung zum automatischen exakten Dosieren kleiner Flüssigkeitsmengen in einem medizinischen Analysegerät, umfassend
eine Detektionsvorrichtung (2), mittels der eine Flüssigkeits-Phasengrenze (10) in einem lichtdurchlässigen Meßrohr (9) mit einer Kapillare mit einem Innendurchmesser von weniger als 1 mm, bevorzugt weniger als 0,5 mm automatisch detektiert und ein der Position der Phasengrenze (10) in einem Detektionsabschnitt (8) des Meßrohres (9) entsprechendes elektrisches Signal erzeugt wird,
mit einer Beleuchtungseinrichtung (15) mit mindestens einer Lichtquelle (12) zur Beleuchtung des Meßrohres (9), einer Lichtempfangseinrichtung (17) mit mindestens einem Lichtempfänger, die durch das Meßrohr (9) hindurchtretendes Licht empfängt und in von dessen ortsabhängiger Intensitätsverteilung abhängige elektrische Signale umwandelt und einer Auswerteeinheit (7) zur Verarbeitung der Signale der Lichtempfangseinrichtung (17) zu einer Information über die Position der Flüssigkeits-Phasengrenze (10) in dem Meßrohr (9),
wobei die Beleuchtungseinrichtung (15) zur stetigen Beleuchtung eines Detektionsabschnittes (8) des Meßrohres (9) ausgebildet ist und
die Lichtempfangseinrichtung (17) ein optisches Abbildungssystem (18) zur Abbildung des Detektionsabschnittes (8) in eine Bildebene (19) und eine Reihe (20) eng benachbarter lichtempfindlicher Elemente in der Bildebene aufweist,
eine mit einem ersten Ende des Meßrohres (9) in Fluidverbindung stehende Flüssigkeitstransferöffnung (11a) zum Ansaugen und Ausstoßen von Flüssigkeit,
eine mit einem zweiten Ende des Meßrohres (9) in Fluidverbindung stehende Hilfsfluid-Transfereinrichtung (16) zum präzise gesteuerten Zuführen und Absaugen eines gasförmigen oder flüssigen Hilfsfluids zu bzw. von dem Meßrohr und
eine elektronische Steuereinheit (6), durch die die Hilfsfluid-Transfereinrichtung (16) in Abhängigkeit von dem der Position der Flüssigkeits-Phasengrenze (10) entsprechenden Signal derart ansteuerbar ist, daß durch Absaugen bzw. Zuführen von Hilfsfluid zu dem Meßrohr präzise definierte Flüssigkeitsmengen angesaugt bzw. ausgestoßen werden.

2. Vorrichtung nach Anspruch 1, **dadurch gekennzeichnet,** daß die Auswerteeinheit (7) zur Detektion der Position der Flüssigkeits-Phasengrenze (10) in dem Detektionsabschnitt (8) des Meßrohres (9) mittels aus der ortsabhängigen Intensitätsverteilung der elektrischen Signale gewonnenen Informationen über den Signalverlauf der Signale der Lichtempfangseinrichtung (17) ausgebildet ist.

3. Vorrichtung nach einem der vorhergehenden Ansprüche, **dadurch gekennzeichnet,** daß die Auswerteeinheit (7) Filtermittel zum Glätten des Signalverlaufs der Signale der Lichtempfangseinrichtung (17) mittels einer Tiefpaßfilterung umfaßt.

4. Vorrichtung nach einem der vorhergehenden Ansprüche, insbesondere nach Anspruch 3, **dadurch gekennzeichnet,** daß die Auswerteeinheit (7) Differenzierungsmittel zum Differenzieren des Signalverlaufs der Signale der Lichtempfangseinrichtung (17) umfaßt.

5. Vorrichtung nach einem der vorhergehenden Ansprüche, insbesondere nach Anspruch 4, **dadurch gekennzeichnet,** daß die Auswerteeinheit (7) Schwellwertmittel zum Erkennen der Flüssigkeits-Phasengrenze (10) aus dem Signalverlauf der Signale der Lichtempfangseinrichtung (17) mittels einer Schwellwertdetektion umfaßt.

6. Vorrichtung nach einem der vorhergehenden Ansprüche, bei welcher die lichtempfindlichen Elemente CCD's sind.

7. Vorrichtung nach einem der vorhergehenden Ansprüche, bei welcher der Abstand der lichtempfindlichen Elemente voneinander kleiner als 50 µm ist.

8. Vorrichtung nach einem der vorhergehenden Ansprüche, bei welcher die Beleuchtungseinrichtung (15) eine Lichtstreueinrichtung (13) zur Beleuchtung des Detektionsabschnittes (8) des Meßrohres (9) mit diffusem Licht aufweist.

9. Vorrichtung nach Anspruch 8, bei welcher die Lichtstreueinrichtung (13) eine etwa parallel zu dem Meßrohr (11) verlaufende Diffusionsfläche (14a) aufweist.

10. Vorrichtung nach einem der Ansprüche 8 oder 9, bei welcher die Diffusionsfläche (14a) eine Mattscheibe (14) ist und die mindestens eine Lichtquelle (12) sich auf der von dem Meßrohr (11) abgewandten Seite der Mattscheibe (14) befindet.

11. Vorrichtung nach einem der vorhergehenden Ansprüche, bei welcher das Hilfsfluid ein Gas, insbesondere Luft, das Meßrohr (9) ein Steigrohr (11) für die Flüssigkeit und die Phasengrenze (10) ein Flüssigkeitsspiegel ist, der eine Flüssigkeitssäule in dem Steigrohr (11) von einem darüber befindlichen Gasraum (11b) trennt, wobei das Gas dem Gasraum (11b) zugeführt bzw. von diesem abgeführt wird, um präzise definierte Flüssigkeitsmengen auszustoßen bzw. anzusaugen.

12. Vorrichtung nach einem der vorhergehenden Ansprüche, bei welcher die Hilfsfluid-Transfereinrichtung eine Umschaltventileinrichtung (3) aufweist, welche mit einer Fluidabsaugeinrichtung und mit einer Fluidzufuhreinrichtung in Fluidverbindung steht.

13. Vorrichtung nach den Ansprüchen 11 und 12, bei welcher die Umschaltventileinrichtung (3) ein dicht beim oberen Ende des Steigrohres (11) angeordnetes Absperrventil (25) einschließt.

14. Vorrichtung nach einem der Ansprüche 11 bis 13, bei welcher eine Gaspumpe (4) als kombinierte Gasabsaugund Gaszufuhreinrichtung mittels Umschaltventilen (26,27) wahlweise mit ihrer Saugseite und mit ihrer Druckseite an das obere Ende des Steigrohres anschließbar ist.

15. Vorrichtung nach einem der vorhergehenden Ansprüche, dadurch gekennzeichnet, daß das Meßrohr (9) zum Dosieren von Flüssigkeitsmengen von weniger als 20 µl ausgebildet ist.

## Claims

1. Apparatus for the automatic exact metering of small amounts of liquid in a medical analysis system, comprising
a phase boundary detection means (2) by means of which a fluid phase boundary (10) in a transparent measuring tube (9) with a capillary with an inner bore of less than 1 mm, preferably less than 0.5 mm, is automatically detected and an electrical position signal corresponding to the position of the phase boundary (10) in a detection section (8) of the measuring tube (9) is generated,
with an illumination device (15) with at least one light source (12) for the illumination of the measuring tube (9), a light reception means (17) with at least one light detector which detects light passing through the measuring tube (9) and converts it into an electrical signal dependent on the spatial distribution of the light received by the light detector and a data processing means (7) for processing the signals from the light detector (17) into information on the position of the fluid phase boundary (10) in the measuring tube (9),
wherein the illumination device (15) is designed for the spatially steady illumination of a detection section (8) of the measuring tube (9) and
the light reception device (17) comprises an optical imaging system (18) for generating an image of the detection section (8) in an image plane (19) and a row (20) of closely spaced light-sensitive elements in the image plane,
a liquid transfer opening (11a), in fluid communication with a first end of the measuring tube (9), for the aspiration and ejection of liquid,
an auxiliary fluid transfer device (16), in fluid communication with a second end of the measuring tube (9), for the precisely controlled supply and withdrawal of an gaseous or fluid auxiliary fluid to or from the measuring tube and
an electronic control unit (6), by means of which the auxiliary fluid transfer device (16) can be activated as a function of the position signal corresponding to the position of the fluid phase boundary (10) in such a way that by the withdrawal or supply of auxiliary fluid to the measuring tube precisely defined amounts of liquid are aspirated or ejected.

2. Apparatus according to claim 1, characterized in that the data processing means (7) is designed to detect the position of the liquid phase boundary (10) in the detection section (8) of the measuring tube (9) by means of the information obtained from the signal curve of the signals of the light detector (17) being dependent upon a spatial distribution of the intensity of the electrical signals.

3. Apparatus according to any one of the preceding claims, characterized in that the data processing means (7) comprises filter means for smoothing the signal curve of the signals of the light detector (17) by low-pass filtering.

4. Apparatus according to any one of the preceding claims, in particular according to claim 3, characterized in that the data processing means (7) comprises differentiating means for differentiation of the signal curve of the signals of the light detector (17).

5. Apparatus according to any one of the preceding claims, in particular according to claim 4, characterized in that the data processing means (7) comprises threshold means for detection of the liquid phase boundary (10) of the signal curve of the signals of the light detector (17) by treshold detection.

6. Apparatus according to any one of the preceding claims, in which the light-sensitive elements are CCDs.

7. Apparatus according to any one of the preceding claims, in which the spacing of the light-sensitive elements relative to one another is less than 50 µm.

8. Apparatus according to any one of the preceding claims, in which the illumination device (15) comprises a light scattering device (13) for illuminating the detection section (8) of the measuring tube (9) with diffuse light.

9. Apparatus according to claim 8, in which the light scattering device (13) comprises a diffusion surface (14a) positioned essentially parallel with the measuring tube (11).

10. Apparatus according to either of claims 8 or 9, in which the diffusion surface (14a) is a mat lighting plate (14) and the at least one light source (12) is located on the side of the mat lighting plate (14) facing away from the measuring tube (11).

11. Apparatus according to any one of the preceding claims, in which the auxiliary fluid is a gas, in particular air, the measuring tube (9) is a rising tube (11) for the liquid and the phase boundary (10) is a liquid level which separates a liquid column in the rising tube (11) from a gas space (11b) located above the liquid column, the gas being supplied to the gas space (11b) or discharged from the latter in order to eject or aspirate precisely defined amounts of liquid.

12. Apparatus according to any one of the preceding claims, in which the auxiliary fluid transfer device comprises a change-over valve unit (3) which is in fluid communication with a fluid withdrawal means and with a fluid supply means.

13. Apparatus according to claims 11 and 12, in which the change-over valve unit (3) includes a shut-off valve (25) arranged close to the upper end of the rising tube (11).

14. Apparatus according to any one of claims 11 to 13, in which a gas pump (4) is by means of change-over valves (26, 27) optionally connectable with its suction side and with its delivery side to the upper end of the rising tube thereby forming a combined gas withdrawl and gas supply means.

15. Apparatus according to any one of the preceding claims, in which the measuring tube (9) is designed to meter amounts of liquid of less than 20 µl.

## Revendications

1. Dispositif pour le dosage automatique précis de petites quantités de liquide dans un appareil d'analyse médicale, comprenant
un dispositif de détection (2), au moyen duquel une frontière de phases de liquide (10) est automatiquement détectée dans un tube de mesure transparent à la lumière (9) avec un capillaire ayant un diamètre intérieur inférieur à 1 mm, de préférence inférieur à 0,5 mm et un signal électrique est produit, correspondant à la position de la frontière de phases (10) dans une section de détection (8) du tube de mesure (9),
avec un dispositif d'illumination (15) ayant au moins une source lumineuse (12) pour illuminer le tube de mesure (9), un dispositif photorécepteur (17) ayant au moins un photorécepteur, qui reçoit la lumière traversant le tube de mesure (9) et qui la transforme en signaux électriques dépendants de la distribution de son intensité dépendante de la position et avec une unité d'analyse (7) pour le traitement des signaux du dispositif photorécepteur (17) en vue d'une information sur la position de la frontière des phases de liquide (10) dans le tube de mesure (9),
dans lequel le dispositif d'illumination (15) est formé pour illuminer en permanence une section de détection (8) du tube de mesure (9) et
le dispositif photorécepteur (17) comprend un système de formation d'image optique (18) pour former l'image de la section de détection (8) dans un plan d'image (19) et une série d'éléments photosensibles (20) proches voisins dans le plan d'image,
une ouverture de transfert de liquide (11a) se trouve en communication liquide avec une première extrémité du tube de mesure (9) pour aspirer et expulser du liquide,
un dispositif de transfert de fluide auxiliaire (16) se trouvant en communication fluide avec une deuxième extrémité du tube de mesure (9) pour introduire et aspirer de façon commandée et précise, un fluide auxiliaire gazeux ou liquide dans ou à partir du tube de mesure et
une unité de commande électronique (6), par laquelle le dispositif de transfert de fluide auxiliaire (16) peut être commandé en fonction du signal correspondant à la position de la frontière des phases de liquide de sorte q'il aspire ou expulse de façon précise des quantités de liquide définies, au moyen respectivement d'une aspiration ou d'une introduction de fluide auxiliaire dans le tube de mesure.

2. Dispositif selon la revendication 1, caractérisé en ce que l'unité d'analyse (7) est formée en vue de détecter la position de la frontière des phases de liquide (10) dans la section de détection (8) du tube de mesure (9) au moyen des informations extraites des signaux électriques provenant de la distribution d'intensité dépendante de la position, par l'intermédiaire du tracé de signal des signaux du dispositif photorécepteur (17).

3. Dispositif selon l'une quelconque des revendications précédentes, caractérisé en ce que l'unité d'analyse (7) comporte des moyens de filtre pour lisser le tracé de signal des signaux du dispositif photorécepteur (17) au moyen d'un filtrage passe-bas.

4. Dispositif selon l'une quelconque des revendications précédentes, en particulier selon la revendication 3, caractérisé en ce que l'unité d'analyse (7) comprend des moyens de dérivation pour dériver le tracé de signal des signaux du dispositif photorécepteur (17).

5. Dispositif selon l'une quelconque des revendications précédentes, en particulier selon la revendication 4, caractérisé en ce que l'unité d'analyse (7) comprend des moyens de détection de seuil pour détecter la frontière des phases de liquide (10) à partir du tracé de signal des signaux du dispositif photorécepteur (17) au moyen d'une détection de seuil.

6. Dispositif selon l'une quelconque des revendications précédentes, dans lequel les éléments photosensibles sont des dispositifs à couplage de charges (CCD).

7. Dispositif selon l'une quelconque des revendications précédentes, dans lequel l'espacement séparant les éléments photosensibles l'un de l'autre est inférieur à 50 µm.

8. Dispositif selon l'une quelconque des revendications précédentes, dans lequel le dispositif d'illumination (15) comprend un dispositif diffusant la lumière (13) pour illuminer la section de détection (8) du tube de mesure (9) avec une lumière diffuse.

9. Dispositif selon la revendication 8, dans lequel le dispositif diffusant la lumière (13) comprend une surface de diffusion (14a) s'étendant approximativement parallèlement au tube de mesure (11).

10. Dispositif selon l'une quelconque des revendications 8 ou 9, dans lequel la surface de diffusion (14a) est un disque mat (14) et ladite au moins une source lumineuse (12) se trouve du côté du disque mat (14) tourné à l'opposé du tube de mesure (11).

11. Dispositif selon l'une quelconque des revendications précédentes, dans lequel le fluide auxiliaire est un gaz, en particulier de l'air, le tube de mesure (9) est un tube montant (11) pour le liquide et la frontière des phases (10) est un miroir de liquide, qui sépare une colonne de liquide dans le tube montant (11), d'un espace gazeux (11b) se trouvant au-dessus, dans lequel le gaz est introduit dans l'espace gazeux (11b) ou bien évacué de celui-ci, afin d'expulser ou d'aspirer des quantités de liquide définies de manière précise.

12. Dispositif selon l'une quelconque des revendications précédentes, dans lequel le dispositif de transfert de fluide auxiliaire comprend un dispositif de soupape d'inversion (3) qui est en communication fluide avec un dispositif d'aspiration de fluide et avec un dispositif d'introduction de fluide.

13. Dispositif selon les revendications 11 et 12, dans lequel le dispositif de soupape d'inversion (3) renferme un robinet d'arrêt (25) disposé de manière étanche au niveau de l'extrémité supérieure du tube montant (11).

14. Dispositif selon l'une des revendications 11 à 13, dans lequel, une pompe à gaz (4) peut être raccordée en tant que dispositif combiné d'évacuation et d'introduction de gaz au moyen de soupapes d'inversion (26, 27) au choix avec son côté d'aspiration ou avec son côté de compression en communication avec l'extrémité supérieure du tube montant.

15. Dispositif selon l'une quelconque des revendications précédentes, caractérisé en ce que le tube de mesure (9) est formé en vue de doser des quantités de liquide inférieures à 20 µl.
